# EUROPEAN PATENT APPLICATION

(11) **EP 4 852 288 A1**
(43) Date of publication of application: **09.12.2026**
(21) Application number: 25180757.4
(22) Date of filing: 04.06.2025
(51) Int. Cl.: H02M 3/156, H02M 3/00, H02M 1/32, H01H 85/02, H01R 12/70, H05K 7/20

(54) **POWER CONVERTER COMPONENT IN FORM FACTOR OF FUSE**

(71) Applicant: Volvo Truck Corporation, 405 08 Göteborg (SE)
(72) Inventor: Baskaran, Ranjith, Greensboro, 27410 (US); Siripurapu, Yaswanth Kumar, Greensboro, 27455 (US)
(74) Representative: Valea AB

(57) **Abstract**

A power converter component (120) comprising an input terminal (121) having the same physical dimension and shape as an input terminal of a fuse (110) complying with a certain standard; an output terminal (122) comprising a first terminal (1221) configured to output a converted signal and a second terminal (1222) configured to connect to a signal ground, wherein the first and second terminals are electrically isolated; and a body (123) comprising a direct current to direct current (DC/DC) converter.

## Description

### TECHNICAL FIELD

The disclosure relates generally to power converter components. In particular aspects, the disclosure relates to a power converter component in the form factor of a fuse. The disclosure can be applied to heavy-duty vehicles, such as trucks, buses, and construction equipment, among other vehicle types. Although the disclosure may be described with respect to a particular automotive vehicle, the disclosure is not restricted to any particular vehicles.

### BACKGROUND

Automotive vehicles are increasingly incorporating more and more electrical and electronic components. For instance, electric vehicles require a growing number of power conversion components to convert voltages up or down, for supplying power to systems operating at different voltage levels. It is essential to develop a simple and convenient technique for connecting these power conversion components to Electronic Control Units (ECUs) or other components in the vehicle.

### SUMMARY

According to a first aspect of the disclosure, a power converter component is provided. The power converter component comprises an input terminal having the same physical dimension and shape as an input terminal of a fuse complying with a certain standard. The power converter component further comprises an output terminal comprising a first terminal configured to output a converted signal and a second terminal configured to connect to a signal ground, the first and second terminals are electrically isolated. The power converter component further comprises a body comprising a direct current to direct current (DC/DC) converter. The first aspect of the disclosure may seek to provide a simple and convenient technique for connecting a power converter component to ECUs or other components in a vehicle. By configuring the power converter component with an input terminal having the same physical dimension and shape as an input terminal of a fuse complying with a certain standard, the power converter component can be connected to other components easily. A technical benefit may include providing a power converter component with connecting terminals complying with a certain standard for easy connection to other components in the vehicle.

Optionally in some examples, including in at least one preferred example, the DC/DC converter may be any one of a nonsynchronous buck DC/DC converter, a synchronous buck DC/DC converter, a boost DC/DC converter. A technical benefit may include providing a power converter component with various DC/DC converting capability for different applications.

Optionally in some examples, including in at least one preferred example, the body of the power converter component may have the same physical dimension and shape as the body of the fuse complying with a certain standard. A technical benefit may include providing a power converter component with the body being in the form factor of a fuse complying with a certain standard to ensure safety, reliability and compatibility in terms of mounting, connecting and fitting within a system.

Optionally in some examples, including in at least one preferred example, the power converter component may be in the form factor of the fuse 110 complying with a certain standard. A technical benefit may include providing a power converter component with the same form factor of a fuse complying with a certain standard to ensure safety, reliability and compatibility in terms of mounting, connecting, and fitting within a system.

Optionally in some examples, including in at least one preferred example, the power converter component may be in the form factor of any one of a Mega Fuse, a Z case fuse, a J case fuse, a ceramic fuse, a blade fuse, a bolted high-speed fuse. A technical benefit may include providing a power converter component with various physical dimensions and shapes for different applications.

Optionally in some examples, including in at least one preferred example, the power converter component may be in the form factor of a fuse complying with a certain standard specified by any one of the International Organization for Standardization (ISO), the Society of Automotive Engineers (SAE), the International Electrotechnical Commission (IEC), e.g. SAE J1171, ISO 8820-5, ISO 8820-4, IEC 60127-2, ISO 8820-3, IEC 60269-4, etc. A technical benefit may include providing a power converter component with various physical dimensions and shapes specified by various standards for different applications.

Optionally in some examples, including in at least one preferred example, the power converter component may be a 12V to 24V, or a 12V to 48V, or a 24V to 48V, or a 24V to 12V, or a 48V to 24V, or a 48V to 12V converter. A technical benefit may include providing a power converter component with various DC/DC converting capability for different applications.

According to a second aspect of the disclosure, a vehicle comprising a power converter component described above is provided.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** shows a Mega fuse and a power converter component in the form factor of the Mega fuse according to an example.
**FIG. 2** is a schematic showing an exemplary synchronous buck DC/DC converter which may be implemented in a power converter component according to an example.
**FIG. 3** is a schematic showing an exemplary nonsynchronous buck DC/DC converter which may be implemented in a power converter component according to an example.
**FIG. 4** is a schematic showing an exemplary boost DC/DC converter which may be implemented in a power converter component according to an example.
**FIG. 5** is an exemplary vehicle in which a power converter component may be implemented.

### DETAILED DESCRIPTION

The detailed description set forth below provides information and examples of the disclosed technology with sufficient detail to enable those skilled in the art to practice the disclosure.

Automotive fuses are essential for protecting electrical circuits in vehicles. They come in different types, sizes, and amperages, depending on the applications. For example, Mega Fuses, Z case fuses, J case fuses, ceramic fuses, blade fuses, bolted high-speed fuses, etc. To ensure safety, reliability and compatibility in terms of mounting, connectors, and fitting within a system, automotive fuses are usually standard by e.g. the International Organization for Standardization (ISO), such as ISO 8820-5, ISO 8820-4, ISO 8820-3, etc., the Society of Automotive Engineers (SAE), such as SAE J1171, the International Electrotechnical Commission (IEC), such as IEC 60127-2, IEC 60269-4 etc.

Electric vehicles require more and more power conversion components, e.g. DC/DC converters, to convert voltages up or down, for supplying power to systems operating at different voltage levels. If a DC/DC converter has the same size, physical dimension and connector type, then it is easy and convenient to connect to other components in the electric vehicles. However, up to now, there has been no power converter in the same form factor of a standard fuse.

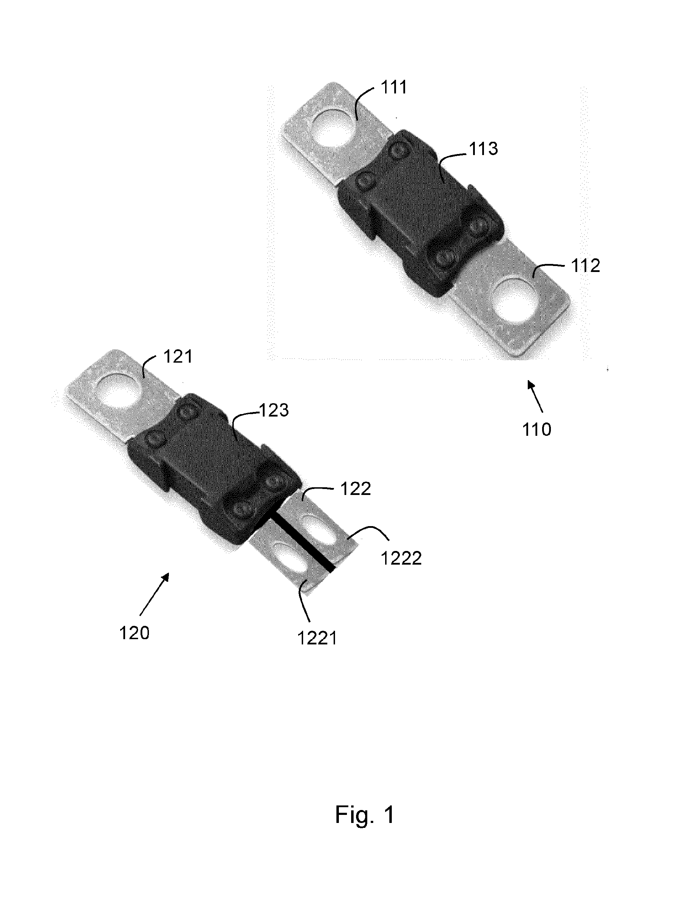

**Fig. 1** shows a fuse **110** and a power converter component **120.** The fuse 110 may be a fuse complying with a certain standard. For example, the fuse 110 may be an ISO fuse with M6, M8, or M10 structures that refer to bolt-down fuses commonly used in high-current automotive and industrial applications. These fuses are part of the ISO 8820-5 standard, typically Mega fuses or similar high-power protection devices. For example, Mega fuse or Automotive Mega Fuse with M6/M8/M10 bolt size of 6mm/ 8mm/10mm diameter are commonly used for electric vehicles, hybrid systems, large inverters, high-power automotive circuits, battery protection, industrial machinery, heavy-duty trucks, large battery packs etc.

The power converter component 120 may be configured in the form factor of the fuse 110. To achieve this, the power converter component 120 comprises an input terminal **121** having the same physical dimension and shape as an input terminal **111** of the fuse 110. For example, the fuse 110 may comply with the standard e.g. SAE J1171. Thus, the input terminal 121 may be a flat, bolt-down type terminal and may approximately have a width of 19 mm, thickness of 1.8-2 mm, a bolt hole diameter of 8.5 mm, a center-to-center distance between holes of 51 mm, etc.

The output terminal of the fuse 110 may be modified to have two isolated outputs, when adapted to a power converter component. Thus, the power converter component 120 further comprises an output terminal **122** comprising a first terminal **1221** configured to output a converted signal and a second terminal **1222** configured to connect to a signal ground. The first and second terminals are separate and electrically isolated.

The power converter component 120 further comprises a body **123** comprising a DC/DC converter. The body 123 of the power converter component 120 has the same physical dimension and shape as the body **113** of the fuse 110. For example, the power converter component 120 may approximately have a typical dimension of overall length 68mm, body width 19mm, body height 8mm.

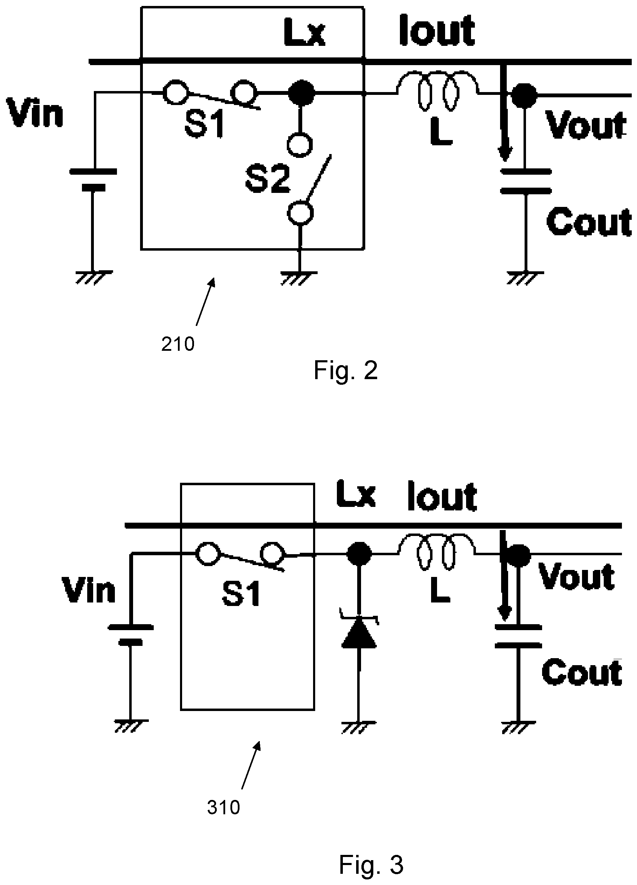

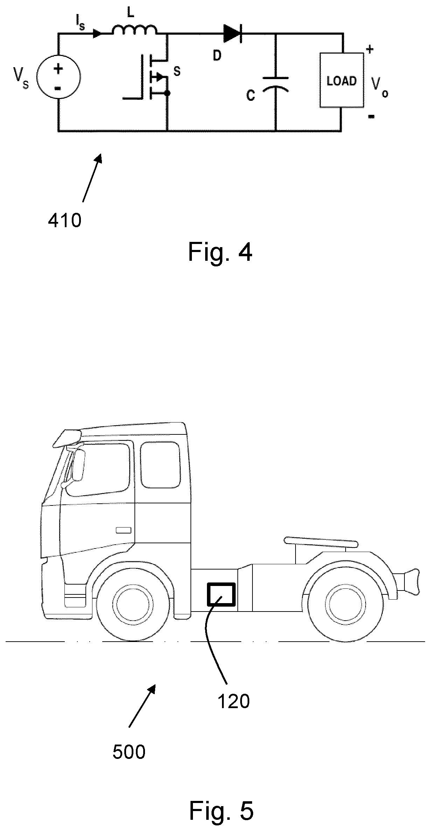

Any type of DC/DC converter may be implemented in the body 123 of the power converter component 120, e.g. a synchronous buck DC/DC converter **210,** as shown in **Fig.2****,** a nonsynchronous buck DC/DC converter **310,** as shown in **Fig. 3****,** a boost DC/DC converter **410,** as shown in **Fig.4****.** The DC/DC converter may be a 12V to 24V, or a 12V to 48V, or a 24V to 48V, or a 24V to 12V, or a 48V to 24V, or a 48V to 12V converter.

Although the fuse 110 shown in Fig.1 has a Mega fuse shape, the fuse 110 may be any type of fuse complying with a certain standard, such as, a Z case fuse, a J case fuse, a ceramic fuse, a blade fuse, a bolted high-speed fuse etc., specified by any one of the ISO, SAE, IEC etc. e.g. SAE J1171, ISO 8820-5, ISO 8820-4, IEC 60127-2, ISO 8820-3, IEC 60269-4, etc.

For example, the power converter component 120 may be in the form factor of a Mega fuse complying with the standard SAE J1171 and has a typical dimension of overall length 68mm, body width 19mm, body height 8mm, approximately and the input terminal is a flat, bolt-down type terminal and has a width of 19 mm, thickness of 1.8-2 mm, a bolt hole diameter of 8.5 mm, a center-to-center distance between holes of 51 mm, approximately.

The power converter component 120 may be in the form factor of a Z case fuse complying with the standard ISO 8820-5 and has a typical dimension of overall length 30 mm, body width 12.5 mm, body height 26.6 mm, terminal hole diameter 8.5 mm, approximately.

The power converter component 120 may be in the form factor of a J case fuse complying with the standard ISO 8820-4 and has a typical dimension of overall height 27.0 mm, body width 12.0 mm, body thickness 10.0 mm, terminal width 6.8 mm, terminal thickness 0.8 mm, terminal length 12.0 mm, approximately.

The power converter component 120 may be in the form factor of a ceramic fuse complying with the standard IEC 60127-2 and has a typical dimension of length 10-58 mm and diameter 3.6-22 mm, approximately.

The power converter component 120 may be in the form factor of a blade fuse complying with the standard ISO 8820-3 and has a typical dimension of length 10.9-29.2 mm, width 3.6-8.4 mm, height 8.73-18.5 mm, approximately.

The power converter component 120 may be in the form factor of a bolted high-speed fuse complying with the standard IEC 60269-4 and has a typical dimension of length 78.5-200 mm, width 30-75 mm, height 60-89 mm, approximately.

To summarize, by configuring the power converter component 120 in the form factor of a fuse complying with a certain standard, the power converter component 120 can be connected to ECUs and other components in a vehicle easily, safely and conveniently. The power converter component 120 in the form factor of a standard fuse will also have the benefit of compatibility, reliability, interchangeability and cost efficiency in component design and manufacturing.

The power converter component 120 may be implemented in any electronic products, for example in vehicles. **Fig. 5** shows an exemplary vehicle **500.** The vehicle 500 comprises a power converter component 120 as described above.

The vehicle 500 may be a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle 500 may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle 500 may be operated by a user (not shown) and/or be at least partly automatically driven, i.e., it may be a vehicle comprising autonomous driving capabilities. The vehicle 500 may be a fully electric vehicle or a hybrid vehicle or a vehicle driven only by a combustion engine. As such, the vehicle 500 may comprise one or more electric motors/generators and/or an internal combustion engine for driving the vehicle 500.

The term vehicle will be used herein when referring to any of the above types of vehicles.

**Some examples are listed in the following:**
Example 1. A power converter component (120) comprising:
   an input terminal (121) having the same physical dimension and shape as an input terminal of a fuse (110) complying with a certain standard;
   an output terminal (122) comprising a first terminal (1221) configured to output a converted signal and a second terminal (1222) configured to connect to a signal ground, wherein the first and second terminals are electrically isolated; and a body (123) comprising a direct current to direct current, DC/DC, converter.
Example 2. The power converter component (120) according to Example 1,
   wherein the DC/DC converter is any one of a nonsynchronous buck DC/DC converter (310), a synchronous buck DC/DC converter (210), a boost DC/DC converter (410).
Example 3. The power converter component (120) according to any one of Examples 1-2, wherein the body (123) of the power converter component (120) has the same physical dimension and shape as the body (113) of the fuse (110) complying with a certain standard.
Example 4. The power converter component (120) according to any one of Examples 1-3, wherein the power converter component (120) is in the form factor of the fuse (110) complying with a certain standard.
Example 5. The power converter component (120) according to any one of Examples 1-4, wherein the fuse (110) is any one of a Mega Fuse, a Z case fuse, a J case fuse, a ceramic fuse, a blade fuse, a bolted high-speed fuse.
Example 6. The power converter component (120) according to any one of Examples 1-5, wherein the fuse (110) complying with a certain standard is specified by any one of the International Organization for Standardization, ISO, the Society of Automotive Engineers, SAE, the International Electrotechnical Commission, IEC.
Example 7. The power converter component (120) according to Example 6,
   wherein the certain standard is any one of SAE J1171, ISO 8820-5, ISO 8820-4, IEC 60127-2, ISO 8820-3, IEC 60269-4.
Example 8. The power converter component (120) according to any one of Examples 1-7, wherein the power converter component (120) is in the form factor of a Mega Fuse complying with the standard SAE J1171 and has a typical dimension of overall length 68mm, body width 19mm, body height 8mm, approximately and the input terminal is a flat, bolt-down type terminal and has a width 19 mm, thickness 1.8-2 mm, a bolt hole diameter 8.5 mm, a center-to-center distance between holes 51 mm, approximately.
Example 9. The power converter component (120) according to any one of Examples 1-7, wherein the power converter component (120) is in the form factor of a Z case fuse complying with the standard ISO 8820-5 and has a typical dimension of overall length 30 mm, body width 12.5 mm, body height 26.6 mm, terminal hole diameter 8.5 mm, approximately.
Example 10. The power converter component (120) according to any one of Examples 1-7, wherein the power converter component (120) is in the form factor of a J case fuse complying with the standard ISO 8820-4 and has a typical dimension of overall height 27.0 mm, body width 12.0 mm, body thickness 10.0 mm, terminal width 6.8 mm, terminal thickness 0.8 mm, terminal length 12.0 mm, approximately.
Example 11. The power converter component (120) according to any one of Examples 1-7, wherein the power converter component (120) is in the form factor of a ceramic fuse complying with the standard IEC 60127-2 and has a typical dimension of length 10-58 mm and diameter 3.6-22 mm, approximately.
Example 12. The power converter component (120) according to any one of Examples 1-7, wherein the power converter component (120) is in the form factor of a blade fuse complying with the standard ISO 8820-3 and has a typical dimension of length 10.9-29.2 mm, width 3.6-8.4 mm, height 8.73-18.5 mm, approximately.
Example 13. The power converter component (120) according to any one of Examples 1-7, wherein the power converter component (120) is in the form factor of a bolted high-speed fuse complying with the standard IEC 60269-4 and has a typical dimension of length 78.5-200 mm, width 30-75 mm, height 60-89 mm, approximately.
Example 14. The power converter component (120) according to any one of Examples 1-13, wherein the DC/DC converter is a 12V to 24V, or a 12V to 48V, or a 24V to 48V, or a 24V to 12V, or a 48V to 24V, or a 48V to 12V converter. Example 15. A vehicle (500) comprises a power converter component (120) according to any one of Examples 1-14.
Example 16. An electronic product comprises a power converter component (120) according to any one of Examples 1-14.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A power converter component (120) comprising:
an input terminal (121) having the same physical dimension and shape as an input terminal of a fuse (110) complying with a certain standard;
an output terminal (122) comprising a first terminal (1221) configured to output a converted signal and a second terminal (1222) configured to connect to a signal ground, wherein the first and second terminals are electrically isolated; and
a body (123) comprising a direct current to direct current, DC/DC, converter.

2. The power converter component (120) according to claim 1, wherein the DC/DC converter is any one of a nonsynchronous buck DC/DC converter (310), a synchronous buck DC/DC converter (210), a boost DC/DC converter (410).

3. The power converter component (120) according to any one of claims 1-2, wherein the body (123) of the power converter component (120) has the same physical dimension and shape as the body (113) of the fuse (110) complying with a certain standard.

4. The power converter component (120) according to any one of claims 1-3, wherein the power converter component (120) is in the form factor of the fuse (110) complying with a certain standard.

5. The power converter component (120) according to any one of claims 1-4, wherein the fuse (110) is any one of a Mega Fuse, a Z case fuse, a J case fuse, a ceramic fuse, a blade fuse, a bolted high-speed fuse.

6. The power converter component (120) according to any one of claims 1-5, wherein the fuse (110) complying with a certain standard is specified by any one of the International Organization for Standardization, ISO, the Society of Automotive Engineers, SAE, the International Electrotechnical Commission, IEC, and the certain standard is any one of SAE J1171, ISO 8820-5, ISO 8820-4, IEC 60127-2, ISO 8820-3, IEC 60269-4.

7. The power converter component (120) according to any one of claims 1-6, wherein the power converter component (120) is in the form factor of a Mega Fuse complying with the standard SAE J1171 and has a typical dimension of overall length 68mm, body width 19mm, body height 8mm, approximately and the input terminal is a flat, bolt-down type terminal and has a width of 19 mm, thickness of 1.8-2 mm, a bolt hole diameter of 8.5 mm, a center-to-center distance between holes of 51 mm, approximately.

8. The power converter component (120) according to any one of claims 1-6, wherein the power converter component (120) is in the form factor of a Z case fuse complying with the standard ISO 8820-5 and has a typical dimension of overall length 30 mm, body width 12.5 mm, body height 26.6 mm, terminal hole diameter 8.5 mm, approximately.

9. The power converter component (120) according to any one of claims 1-6, wherein the power converter component (120) is in the form factor of a J case fuse complying with the standard ISO 8820-4 and has a typical dimension of overall height 27.0 mm, body width 12.0 mm, body thickness 10.0 mm, terminal width 6.8 mm, terminal thickness 0.8 mm, terminal length 12.0 mm, approximately.

10. The power converter component (120) according to any one of claims 1-6, wherein the power converter component (120) is in the form factor of a ceramic fuse complying with the standard IEC 60127-2 and has a typical dimension of length 10-58 mm and diameter 3.6-22 mm, approximately.

11. The power converter component (120) according to any one of claims 1-6, wherein the power converter component (120) is in the form factor of a blade fuse complying with the standard ISO 8820-3 and has a typical dimension of length 10.9-29.2 mm, width 3.6-8.4 mm, height 8.73-18.5 mm, approximately.

12. The power converter component (120) according to any one of claims 1-6, wherein the power converter component (120) is in the form factor of a bolted high-speed fuse complying with the standard IEC 60269-4 and has a typical dimension of length 78.5-200 mm, width 30-75 mm, height 60-89 mm, approximately.

13. The power converter component (120) according to any one of claims 1-12, wherein the DC/DC converter is a 12V to 24V, or a 12V to 48V, or a 24V to 48V, or a 24V to 12V, or a 48V to 24V, or a 48V to 12V converter.

14. A vehicle (500) comprises a power converter component (120) according to any one of claims 1-13.

15. An electronic product comprises a power converter component (120) according to any one of claims 1-13.
